# EUROPÄISCHE PATENTSCHRIFT

(11) **EP 2 957 252 B1**
(45) Veröffentlichungstag und Bekanntmachung des Hinweises auf die Patenterteilung: **19.07.2017**
(21) Anmeldenummer: 14172531.7
(22) Anmeldetag: 16.06.2014
(51) Int. Cl.: A61C 7/00, A61C 7/14

(54) **Verfahren zur Herstellung eines dreidimensionalen Echtmodells der Ist-Stellung von wenigstens zwei Zähnen eines Patienten**
Method for the production of a three-dimensional true model of the actual position of at least two the teeth of a patient
Procédé de fabrication d'un modèle réel en trois dimensions de la position réelle d'au moins deux dents d'un patient

(43) Veröffentlichungstag der Anmeldung: 23.12.2015
(73) Patentinhaber: OrthoSetup GmbH, 92318 Neumarkt in der Oberpfalz (DE)
(72) Erfinder: Hofmann, Michael, 92318 Neumarkt in der Oberpfalz (DE); Aichinger, Florian, 80337 München (DE)
(74) Vertreter: Pellengahr, Maximilian Rudolf

(56) Entgegenhaltungen:
- WO-A1-2014/093084
- DE-A1-102011 085 915
- US-A1- 2007 087 302

## Beschreibung

Die vorliegende Erfindung betrifft ein Verfahren mit den Merkmalen des Oberbegriffs von Anspruch 1 zur Herstellung eines dreidimensionalen Echtmodells der Ist-Stellung von wenigstens zwei Zähnen eines Patienten, wobei das Echtmodell weiter wenigstens eine Haltevorrichtung umfasst, die mit einem zugehörigen Zahn aus den wenigstens zwei Zähnen in dem Echtmodell verbunden und dazu ausgebildet ist, ein Angriffselement formschlüssig in einer Soll-Position an dem zugehörigen Zahn zu halten, wobei das Verfahren die folgenden Schritte umfasst: A) Erstellen eines dreidimensionalen digitalen Modells für die wenigstens zwei Zähne und die Haltevorrichtung und B) Erstellen des dreidimensionalen Echtmodells auf Basis des dreidimensionalen digitalen Modells, vorzugsweise vermittels einem Rapid-Prototyping Verfahren.

Ein Verfahren mit den Merkmalen des Oberbegriffs von Anspruch 1 ist beispielsweise aus der WO 2013/068131 A1 bekannt und dient dazu, die Herstellung einer von dem Echtmodell abzuformenden Hilfsvorrichtung für das Befestigen des wenigstens einen Angriffselements auf dem zugehörigen Zahn des Patienten vorzubereiten.

Bei der kieferorthopädischen Behandlung von Zahn-Fehlstellungen über fest installierte Zahnspangen werden Angriffselemente, in der Fachsprache auch als "Brackets" bezeichnet, auf den Zähnen fixiert, beispielsweise durch Klebstoff, und dienen als Angriffsstellen für die beispielsweise von Drahtbögen oder Gummibändern erzeugten Stellkräfte.

Da fünf der sechs Freiheitsgrade im Raum bei den Zähnen in einer solchen kieferorthopädischen Behandlung über die Angriffselemente bestimmt werden, ist eine akkurate Platzierung dieser Angriffselemente überaus wichtig für den Behandlungserfolg.

Man unterscheidet das direkte Setzen der Angriffselemente, bei dem jedes Angriffselement manuell auf den zugehörigen Zahn an die Soll-Position gesetzt wird, vom indirekten Setzen der Angriffselemente mittels einer Übertragungsmaske wie in der WO 2013/068131 A1.

Nachteile des direkten Setzens der Angriffselemente sind zum einen die schlechten Sichtverhältnisse aufgrund von Wange und Zunge des Patienten, was eine akkurate Platzierung erschwert und viel Erfahrung, Geduld und Fingerspitzengefühl erfordert, zum anderen die durch das einzelne Setzen sämtlicher Angriffselemente nacheinander bedingte lange Stuhlzeit für den Patienten.

Bei dem indirekten Setzen der Angriffselemente über eine Übertragungsmaske (Hilfsvorrichtung) wie in der oben genannten Druckschrift werden zunächst die Angriffselemente an den gewünschten Soll-Positionen in Haltevorrichtungen eingesetzt, die an einem Echtmodell der Ist-Stellung der Zähne des Patienten vorgesehen sind, dann werden die Angriffselemente und wenigstens einige charakteristische Oberflächenabschnitte der Zähne des Echtmodells in eine Übertragungsmaske eingebettet, so dass beim Abnehmen der Übertragungsmaske von dem Echtmodell die Angriffselemente an genau definierten Positionen in der Übertragungsmaske gehalten und mit dieser zusammen von dem Echtmodell abgenommen werden. Schließlich wird ein Klebemittel an den Angriffselementen bzw. den Zähnen des Patienten vorgesehen und die Übertragungsmaske mit den darin gehalten Angriffselementen wird auf die Zähne des Patienten aufgesetzt. Auf diese Weise werden die Angriffselemente genau an den gewünschten Stellen auf den Zähnen des Patienten positioniert und durch das Klebemittel fixiert. In einem letzten Schritt wird die Übertragungsmaske abgenommen, wobei die Angriffselemente an den Soll-Positionen auf den Zähnen des Patienten verbleiben.

Bei der Herstellung der Übertragungsmaske haben sich zwei Verfahren mit unterschiedlichen Materialien etabliert. Zum einen Übertragungsmasken auf Basis einer aushärtbaren Formmasse, insbesondere Silikon, andererseits Übertragungsmasken auf Basis tiefziehbarer Folien. Da beide Verfahren in der Zahnmedizin und Zahntechnik weit verbreitet sind, wird von einer genaueren Beschreibung abgesehen.

In der Praxis hat sich herausgestellt, dass trotz der Arbeitserleichterung durch die Verwendung einer solchen Übertragungsmaske umfangreiche manuelle Nachbearbeitungen an dem Echtmodell oder/und an der davon abgeformten Übertragungsmaske notwendig sind, um eine problemlose Positionierung der Angriffselemente an den Zähnen des Patienten zu gewährleisten.

So muss im Stand der Technik das Echtmodell, welches üblicherweise die tatsächliche Form von Zähnen und Zahnfleisch einschließlich zahlreicher Vertiefungen detailgetreu abbildet, aufwändig mit Dentalwachs nachbearbeitet (ausgeblockt) werden, um Hinterschneidungen bzw. unter sich gehende Stellen zu beseitigen, damit das Modell problemlos mit der Übertragungsmaske abgeformt werden kann.

Außerdem ist in vielen Fällen eine Nachbearbeitung des Echtmodells oder/und der von dem Echtmodell abgeformten Übertragungsmaske notwendig, etwa um eine gewünschte Höhe der Maske einzustellen oder so genannte Entlastungsschnitte vorzunehmen, die ein Abnehmen der Übertragungsmaske von den Zähnen des Patienten unter geringem Kraftaufwand ermöglichen und so insbesondere ein unerwünschtes Verschieben oder Ablösen der bereits an den Zähnen des Patienten fixierten Angriffselemente beim Abnehmen der Übertragungsmaske vermeiden.

Diese manuelle Nachbearbeitung ist zeitaufwändig und erfordert ebenfalls Erfahrung, Geduld und Fingerspitzengefühl.

Druckschrift US 2007/0087302 A1 offenbart ein Verfahren, bei dem auf Basis eines dreidimensionalen digitalen Modells der Zähne und der daran positionierten Angriffselemente kein Echtmodell der Zähne mit Haltevorrichtungen sondern ein digitales Modell der Übertragungsmaske erstellt wird. Die eigentliche Übertragungsmaske wird auf Grundlage des digitalen Modells der Maske mit einem Rapid-Prototyping-Verfahren erstellt, und die Angriffselemente werden direkt in die Übertragungsmaske eingesetzt, bevor sie vermittels der Übertragungsmaske auf den Zähnen des Patienten befestigt werden. Weiterhin wird offenbart, das digitale Modell der Übertragungsmaske zu modifizieren, um das Abnehmen der auf Basis des modifizierten Modells erstellten Übertragungsmaske von den Zähnen des Patienten nach dem Befestigen der Angriffselemente zu erleichtern.

Die nachveröffentlichte Druckschrift WO 2014/093084 A1 offenbart die Erstellung eines Echtmodells auf Basis eines dreidimensionalen digitalen Modells der Zahnstellung eines Patienten Dabei sind an dem digitalen Modell und an dem Echtmodell sogenannte Analogstrukturen vorgesehen, welche die Form von Angriffselementen nachbilden oder annähern. Die tatsächlichen Angriffselemente werden direkt in die von dem Echtmodell abgeformte Übertragungsmaske eingesetzt. Weiterhin wird offenbart, das digitale Modell von Zähnen und Analogstrukturen vor der Erstellung des Echtmodells so nachzubearbeiten, dass unter sich gehende Stellen reduziert werden.

Vor dem Hintergrund dieses Standes der Technik besteht die Aufgabe der vorliegenden Erfindung folglich darin, das oben beschriebene gattungsgemäße Verfahren so weiterzuentwickeln, dass die Erstellung einer Übertragungsmaske auf Basis des gemäß dem Verfahren hergestellten Echtmodells vereinfacht wird.

Hierzu ist erfindungsgemäß vorgesehen, dass der Schritt A) einen Schritt a1) umfasst, bei dem wenigstens eine Hilfsstruktur an dem digitalen Modell vorgesehen wird. Dabei ist die Hilfsstruktur erfindungsgemäß dazu ausgebildet, eine Nachbearbeitung des Echtmodells oder einer davon abzuformenden Übertragungsmaske zu erleichtern.

Grundsätzlich ist es möglich, zunächst ein digitales Modell (Basis-Modell) für die wenigstens zwei Zähne und die Haltevorrichtung zu erstellen, wie aus der vorgenannten Druckschrift bekannt, und dieses digitale Modell nachträglich unter Beibehaltung der Haltevorrichtung und wenigstens einiger charakteristischer Oberflächenabschnitte der wenigstens zwei Zähne durch Vorsehen der Hilfsstruktur zu modifizieren, wobei im Schritt B) das Echtmodell auf Basis des so modifizierten digitalen Modells erstellt wird.

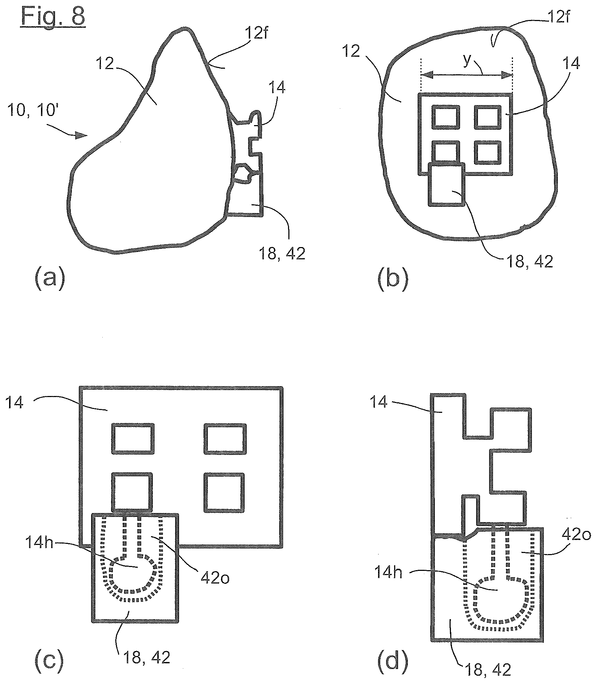

Es ist aber auch möglich, etwa die Haltevorrichtung und die Hilfsstruktur gemeinsam in einem einzigen Arbeitsschritt an einem digitalen Modell (Basis-Modell) der Ist-Stellung von den wenigstens zwei Zähnen vorzusehen, wie im Zusammenhang mit dem in Figur 8 dargestellten Ausführungsbeispiel näher erläutert wird.

Insbesondere kann vorgesehen sein, dass die im Schritt a1) vorgesehene Hilfsstruktur als Bearbeitungsmarkierung ausgebildet ist, um dem Zahntechniker, Zahnarzt oder Kieferorthopäden anzuzeigen, wo nachträglich beispielsweise Schnitte oder andere Nachbearbeitungsschritte an der von dem Echtmodell abgeformten Übertragungsmaske vorgenommen werden sollen.

Alternativ oder zusätzlich kann die Hilfsstruktur als Entformungserleichterung ausgebildet sein, also beispielsweise für eine sich in Entformungsrichtung (nach oben) im Wesentlichen verjüngende Form des Echtmodells sorgen.

Begriffe wie "oben" und "unten" beziehen sich hierbei auf eine Zahn-Höhenrichtung also die Richtung von der Zahnwurzel (unten) zur Kaufläche (oben).

Der Begriff des Entformens kann sich auf das Abnehmen der Übertragungsmaske sowohl von dem Echtmodell als auch von den Zähnen des Patienten beziehen.

Als Entformungserleichterung kann insbesondere vorgesehen sein, dass der Schritt a1) umfasst, eine in der Ist-Stellung von Zähnen und ggf. Zahnfleisch des Patienten vorliegende Vertiefung wenigstens teilweise aufzufüllen, so dass insbesondere unter sich gehende Stellen ausgeblockt werden.

Solche Vertiefungen können zum Beispiel Zahn-Zwischenräume oder Vertiefungen im Bereich des Sulcus gingivae sein.

Zum Ausblocken des wenigstens einen Angriffselements kann insbesondere vorgesehen sein, dass der Schritt a1) umfasst, an dem digitalen Modell einen Vorsprung unterhalb der Sollposition für das Angriffselement vorzusehen. Vorzugsweise kann sich ein solcher Vorsprung in einer Zahn-Umfangsrichtung über die gesamte Breite des Angriffselements in dieser Richtung erstrecken. Auch kann vorgesehen sein, dass ein solcher Vorsprung wenigstens einen Teil der Haltevorrichtung für das Angriffselement bildet oder umfasst.

Um die Positionierung eines solchen Vorsprungs für den Bearbeiter zu erleichtern, kann insbesondere vorgesehen sein, das digitale Modell vorübergehend um das bzw. die Angriffselemente zu ergänzen und das Modell einschließlich der Angriffselemente auf einem Bildschirm anzuzeigen, wie später noch genauer beschrieben wird.

Zur Markierung von Schnittstellen, zur Erleichterung eines Schnitts oder/und auch zur Erzeugung bzw. Vorbereitung von Sollbruchstellen an der Übertragungsmaske kann vorgesehen sein, dass der Schritt a1) umfasst, an dem digitalen Modell auf Höhe des Zahnfleischs wenigstens eine Vertiefung oder einen Vorsprung als Bearbeitungsmarkierung vorzusehen.

Hierdurch kann beispielsweise eine lokale Dicken-Reduktion an der von dem Echtmodell abgeformten Übertragungsmaske erreicht werden, die einen nachträglichen Schnitt an der Übertragungsmaske markieren, erleichtern und gegebenenfalls ganz ersetzen kann, wobei die Stelle mit reduzierter Dicke im letzteren Fall als Sollbruchstelle dient.

Hierzu kann insbesondere vorgesehen sein, dass der Schritt a1) umfasst, an dem digitalen Modell auf Höhe des Zahnfleischs wenigstens eine auf einer im Wesentlichen konstanten Höhe verlaufende, vorzugsweise umlaufende Struktur in Form einer Vertiefung oder eines Vorsprungs oder einer Reihe von Vertiefungen oder/und Vorsprüngen vorzusehen. Insbesondere kann auf diese Weise leicht eine Gesamt-Höhe für die Übertragungsmaske eingestellt werden, die von dem Echtmodell abgeformt wird.

Soll die Übertragungsmaske auf Basis des Echtmodells gebildet werden, indem das Echtmodell mit einer aushärtbaren Formmasse (etwa Silikon) abgeformt wird, kann als vorteilhafte Weiterbildung vorgesehen sein, dass der Schritt a1) umfasst, an dem digitalen Modell Begrenzungswände vorzusehen, die einen wenigstens nach oben, also auf der Seite der Kauflächen der Zähne offenen Hohlraum definieren, in welchem die Zähne und die wenigstens eine Haltevorrichtung vorgesehen sind.

Auf diese Weise kann auf zusätzliche Schritte zur Bildung einer Formkavität für die Formmasse weitgehend oder vollständig verzichtet werden. Weiterhin ist es auf diese Weise besonders einfach, die Formkavität so klein wie möglich auszubilden, um nur soviel Formmasse einsetzen zu müssen, wie unbedingt erforderlich.

Zur Erleichterung bzw. Ersetzung von Entlastungsschnitten, insbesondere bei der Verwendung von Folien-Übertragungsmasken kann vorgesehen sein, dass der Schritt a1) umfasst, wenigstens einen Vorsprung an dem digitalen Modell vorzusehen, der als Wand ausgebildet ist, die sich in Zahn-Höhenrichtung und im Wesentlichen senkrecht zu einer Zahn-Seitenfläche erstreckt, wobei eine Dicke der Wand parallel zu der Zahn-Seitenfläche kleiner oder gleich 1 mm und vorzugsweise größer oder gleich 0,1 mm ist. Bevorzugt ist eine Ausdehnung der Wand senkrecht zur Zahn-Seitenfläche größer oder gleich 3 mm und besonders bevorzugt kleiner oder gleich 20 mm.

Die Erstellung und ggf. Modifizierung des digitalen Modells im Rahmen des erfindungsgemäßen Verfahrens kann auf besonders benutzerfreundliche Weise an einem Rechner mit einer grafischen Benutzeroberfläche durchgeführt werden.

Hierbei kann das digitale Modell in unterschiedlichen Stadien der Bearbeitung einem Benutzer an einem Bildschirm angezeigt werden, so dass dieser die Möglichkeit hat, die Auswirkungen der Bearbeitungsschritte zu betrachten und einzelne Schritte gegebenenfalls zu verändern oder rückgängig zu machen.

Auch kann vorgesehen sein, dem Benutzer Bearbeitungsoptionen vorzuschlagen und ggf. deren Resultat anzuzeigen. Insbesondere kann vorgesehen sein, dass das digitale Modell wenigstens vor und nach dem Schritt a1) auf einem Bildschirm angezeigt wird, bevorzugt auch während der Durchführung von Schritt a1).

Wie vorstehend bereits erwähnt, kann als Hilfe für den Benutzer bei der Erstellung und Modifizierung des digitalen Modells auch vorgesehen sein, dass vor dem Schritt a1) das Angriffselement an der Sollposition in dem digitalen Modell vorgesehen und gewünschtenfalls während der digitalen Bearbeitung mit angezeigt wird, und nach dem Schritt a1) das Angriffselement wieder von dem digitalen Modell entfernt wird.

Schließlich wird auch Schutz beantragt für ein Verfahren zur Herstellung einer Hilfsvorrichtung für das Befestigen eines Angriffselements an einem zugeordneten Zahn eines Patienten, umfassend die folgenden Schritte: 1) Herstellung eines dreidimensionalen Echtmodells gemäß einem erfindungsgemäßen Verfahren, wie es zuvor beschrieben wurde, 2) Einsetzen des Angriffselements in die Haltevorrichtung des Echtmodells, 3) Einbetten des in der Haltevorrichtung aufgenommenen Angriffselements sowie einer Mehrzahl von charakteristischen Flächen-Abschnitten des Echtmodells in eine Übertragungsmaske auf Basis einer aushärtbaren Formmasse oder wenigstens einer tiefziehbaren Folie, 4) Abnehmen der ausgehärteten bzw. tiefgezogenen Übertragungsmaske einschließlich des darin gehaltenen Angriffselements von dem Echtmodell. Die Übertragungsmaske bildet dabei die Hilfsvorrichtung im Sinne der Ansprüche.

### Bevorzugte Ausführungsbeispiele

Nachfolgend wird die vorliegende Erfindung anhand einiger bevorzugter Ausführungsbeispiele näher erläutert, die in den beiliegenden Figuren dargestellt sind.

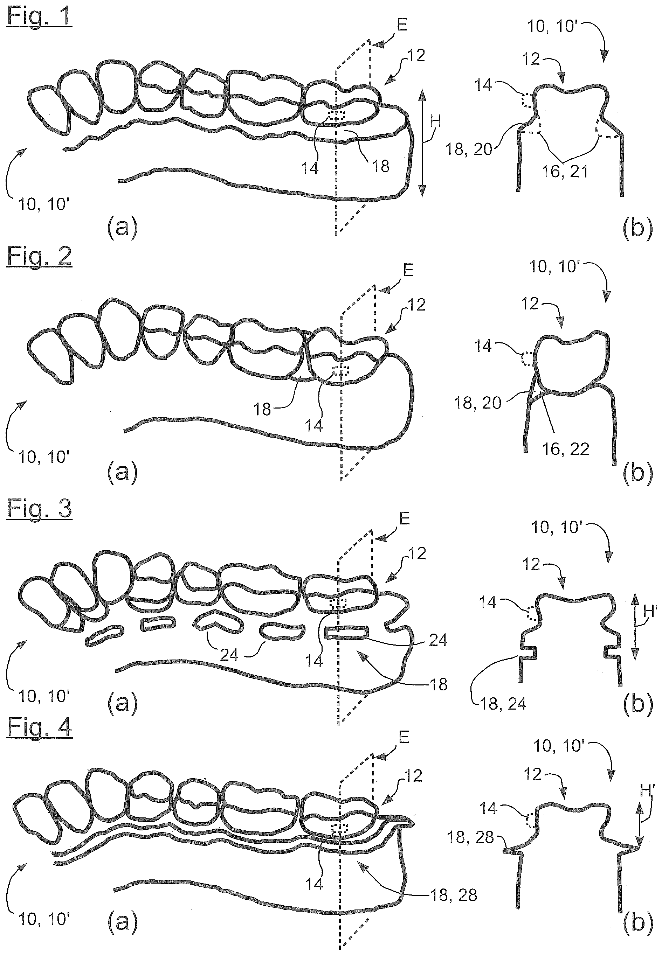

Die beiliegenden Figuren 1 bis 8 zeigen jeweils Ausschnitte eines Echtmodells, das vermittels einem Verfahren gemäß einem ersten bis achten Ausführungsbeispiel der vorliegenden Erfindung hergestellt wurde.

Gleiche oder einander entsprechende Merkmale in unterschiedlichen Ausführungsbeispielen sind jeweils mit den gleichen Bezugszeichen versehen, wobei nach der Beschreibung des ersten Ausführungsbeispiels die übrigen Ausführungsbeispiele nur in soweit genauer diskutiert werden, als sie sich von dem ersten Ausführungsbeispiel unterscheiden.

Weiterhin ist zu beachten, dass es sich bei allen Figuren um stark vereinfachte Schemazeichnungen handelt, die lediglich das Prinzip der Erfindung illustrieren sollen und insbesondere nicht maßstäblich zu verstehen sind.

Schließlich können die in den Figuren dargestellten einzelnen Merkmale, die verschiedene Möglichkeiten einer Ausgestaltung oder Modifikation des digitalen Modells zur Erleichterung einer Nachbearbeitung des Echtmodells oder der Übertragungsmaske illustrieren, in beliebiger Weise kombiniert werden.

Die Figuren 1 bis 6 zeigen jeweils in den Teilabbildungen (a) eine perspektivische Darstellung von einem Ausschnitt eines mittels einem erfindungsgemäßen Verfahren hergestellten Echtmodells 10 bzw. des zugrunde liegenden digitalen Modells 10', und die Teilabbildungen (b) zeigen jeweils einen Querschnitt des Gegenstands der Teilabbildungen (a) entlang einer in den Teilabbildungen (a) jeweils mit Strichlinien angedeuteten Schnittebene E.

Um die Darstellung nicht zur überfrachten, wurde meistens auf die Darstellung der Haltevorrichtungen für die Angriffselemente verzichtet. Hierzu wird beispielsweise auf die einleitend erwähnte Druckschrift WO 2013/068131 A1 verwiesen, in der solche Haltevorrichtungen beispielhaft beschrieben und in den Figuren der Druckschrift mit dem Bezugszeichen 24 gekennzeichnet sind. Die Haltevorrichtungen der vorliegenden Erfindung sind jedoch natürlich nicht auf die in der
WO 2013/068131 A1 illustrierte Ausgestaltung beschränkt.

Figur 1 zeigt ein Echtmodell 10 bzw. digitales Modell 10' der Ist-Stellung von wenigstens zwei Zähnen 12 eines Patienten. In den Figuren ist aus Gründen der Übersicht jeweils nur ein Zahn mit einem Bezugszeichen versehen.

Das Modell 10, 10' umfasst weiter wenigstens eine (in Figur 1 nicht dargestellte) Haltevorrichtung, die mit einem zugehörigen Zahn 12 in dem Echtmodell verbunden und dazu ausgebildet ist, ein in den Abbildungen gestrichelt angedeutetes Angriffselement 14 formschlüssig in einer Sollposition an dem zugehörigen Zahn 12 zu halten.

Es wird darauf hingewiesen, dass das Angriffselement 14 nicht Teil des Echtmodells 10 ist, sondern nachträglich in die Haltevorrichtung des Echtmodells 10 eingesetzt werden kann.

Auch wenn in den Figuren jeweils nur ein Angriffselement 14 dargestellt ist, ist es üblich, Angriffselemente an verschiedenen Zähnen des Patienten vorzusehen, die in bekannter Weise beispielsweise über Drahtbögen oder Gummibänder verbunden werden können, um Stellkräfte zur Erzielung der gewünschten Korrektur der Zahnstellung auszuüben.

Das ursprüngliche digitale Modell der Zähne und der Haltevorrichtung, das beispielsweise mit einem Verfahren erstellt werden kann, wie es in der vorgenannten Druckschrift beschrieben wird, kann die tatsächliche Form der Zähne und des Zahnfleischs darstellen, einschließlich zahlreicher Vertiefungen.

Solche Vertiefungen 16, etwa im Bereich des Sulcus gingivae 21, die in Teilabbildung (b) von Figur 1 in gestrichelten Linien angedeutet sind, können in einem Verfahren gemäß einem Ausführungsbeispiel der Erfindung wenigstens teilweise aufgefüllt werden. In der Fachsprache wird dies als "Ausblocken unter sich gehender Stellen" bezeichnet und im Stand der Technik üblicherweise durch eine aufwändige manuelle Nachbearbeitung eines Echtmodells beispielsweise mit Dentalwachs erreicht.

Die auf diese Weise erfindungsgemäß an dem digitalen Modell 10' vorgesehene Hilfsstruktur 18 dient also als Entformungserleichterung sowohl bei der Abnahme der Übertragungsmaske von dem Echtmodell 10 als auch beim Abnehmen der Übertragungsmaske von den Zähnen des Patienten nach dem Aufkleben des Angriffselements 14 an der gewünschten Stelle.

Figur 2 illustriert eine Ausführungsvariante, bei der das digitale Modell 10' so modifiziert bzw. ausgestaltet ist, dass ein Zahn-Zwischenraum 22 als Vertiefung 16 wenigstens teilweise aufgefüllt wurde.

Um eine von dem Echtmodell abgeformte Übertragungsmaske problemlos in den Mund des Patienten einsetzen zu können ist es üblicherweise notwendig, die Übertragungsmaske so zu gestalten oder nachzubearbeiten, dass sie eine geeignete, definierte Höhe aufweist.

Ein wesentlicher Parameter hierfür ist die Gesamt-Höhe H (vgl. Fig. 1) des digitalen Modells 10' und damit des Echtmodells 10.

Soll das Echtmodell 10 zur Herstellung einer Übertragungsmaske auf Basis tiefziehbarer Folien verwendet werden, kann gemäß einem Ausführungsbeispiel der Erfindung im Schritt a1) eine Gesamt-Höhe H des digitalen Modells 10' und damit des Echtmodells 10 in Abhängigkeit von der Dicke oder/und dem Material der später zu verwendenden Folien festgelegt werden, etwa durch Zugriff auf in tabellarischer Form gespeicherte Erfahrungswerte für eine optimale Höhe der Übertragungsmaske in Abhängigkeit von Dicke oder/und Material der jeweiligen Folien.

Um eine Bearbeitungsmarkierung, Ausarbeitungshilfe oder Sollbruchstelle an der Übertragungsmaske zu erzeugen, mit der etwa die Einstellung einer definierten Höhe der Übertragungsmaske erleichtert wird, können weiter beispielsweise Ausführungsvarianten des erfindungsgemäßen Verfahrens verwendet werden, die zu einem Echtmodell 10 bzw. digitalen Modell 10' führen, wie es in den Figuren 3 und 4 dargestellt ist.

Gemäß Figur 3 kann eine Hilfsstruktur 18 als Reihe von Vertiefungen 24 ausgebildet sein, die auf einer im Wesentlichen konstanten Höhe um das Modell 10 bzw. 10' umlaufen.

Alternativ kann auch ein um das Modell 10, 10' auf im Wesentlichen konstanter Höhe umlaufender Vorsprung 28 als Hilfsstruktur 18 eingesetzt werden, wie er in Figur 4 dargestellt ist. Anstelle eines umlaufenden Vorsprungs kann auch eine umlaufende Vertiefung eingesetzt werden.

Bei der Verwendung von tiefziehbaren Folien dünnt die über einem solchen Modell tiefgezogene Folie im Bereich der Erhebungen bzw. Vertiefungen stärker aus, als in benachbarten Bereichen, so dass die Folie nach dem Abnehmen von dem Modell entlang der durch die Erhebungen bzw. Vertiefungen definierten Linie als Markierung leicht durchtrennt werden kann, was zu einer Übertragungsmaske mit reduzierter Höhe H' führt.

Alternativ können solche und ähnliche Strukturen sowohl bei der Herstellung von Masken aus tiefziehbarer Folie als auch von Masken aus aushärtbarer Formmasse als Bearbeitungsmarkierungen verwendet werden, die dem Benutzer anzeigen, wo nachträglich ein Schnitt oder eine andere Nachbearbeitung an der Maske vorgenommen werden soll, was die Nachbearbeitung beträchtlich erleichtern kann.

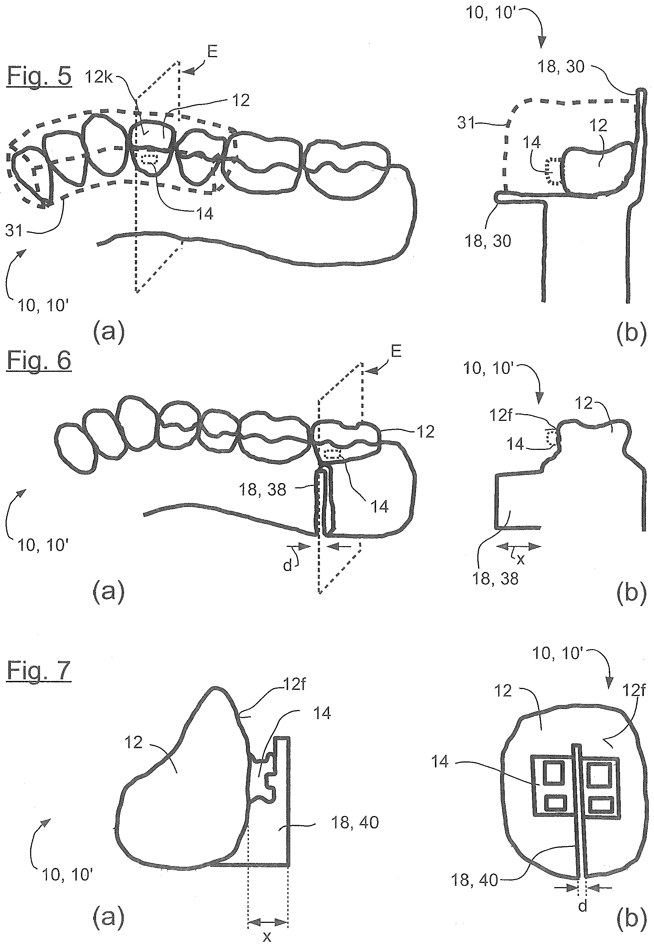

Figur 5 illustriert eine Ausführungsvariante, bei der (nur in Teilabbildung b) gezeigte) Begrenzungswände 30 vorgesehen werden, die einen wenigstens oben, also auf der Seite der Kauflächen 12k, der Zähne 12 offenen Hohlraum definieren, in welchem die Zähne und die (in den Figuren nicht illustrierte) Haltevorrichtung vorgesehen sind. Diese Begrenzungswände 30 dienen als Begrenzungswände einer Formkavität für das Abformen des Echtmodells mit einer aushärtbaren Formmasse 31, etwa Silikon.

Figur 6 illustriert das Ergebnis einer Ausführungsvariante des erfindungsgemäßen Verfahrens, bei der das digitale Modell 10' so ausgebildet ist, dass eine dünne Wand 38 als Vorsprung senkrecht zu einer Zahn-Seitenfläche 12f vorgesehen wird. Die Wand 38 markiert, erleichtert bzw. ersetzt Entlastungsschnitte, um die von dem Echtmodell 10 abgeformten Übertragungsmaske später durch Aufbiegen leicht von dem Echtmodell 10 bzw. von den Zähnen des Patienten abnehmen zu können. Bisher mussten derartige Entlastungsschnitte bzw. Sollbruchstellen nachträglich von Hand, etwa mit einem Skalpell, in die Übertragungsmaske eingebracht werden.

Figur 7 illustriert in den Teilabbildungen a) und b) in einer Seitenansicht und einer Draufsicht auf eine Zahn-Seitenfläche 12f eine Ausführungsvariante, bei der eine Wand 40, ähnlich wie in Figur 6 vorgesehen ist. Das Angriffselement 14 ist in Figur 7 etwas detaillierter dargestellt als in den Figuren 1 bis 6.

Bei den Ausführungsbeispielen der Figuren 6 und 7 kann vorgesehen sein, dass für eine Dicke d der Wand 38, 40 parallel zur Zahn-Seitenfläche 12f 0,1 mg ≤ d ≤ 1 mm gilt. Für eine Ausdehnung x der Wand 38, 40 senkrecht zur Zahn-Seitenfläche 12f kann gelten 3 mm ≤ x ≤ 20 mm.

Schließlich kann, wie in Figur 8 dargestellt, unterhalb von dem Angriffselement 14 bzw. dessen Sollposition ein Vorsprung 42 als Hilfsstruktur 18 vorgesehen sein, der die spätere Entformung einer an dem Echtmodell 10 gegossenen oder tiefgezogenen Übertragungsmaske erleichtern oder/und wenigstens einen Teil der Haltevorrichtung für das Angriffselement 14 bilden kann. Die Ansichten der Teilabbildungen a) und b) von Figur 8 entsprechen dabei denen der Teilabbildungen a) und b) von Figur 7.

Anders als dargestellt kann vorgesehen sein, dass sich der Vorsprung 42 in einer Zahn-Umfangsrichtung über die gesamte Breite y des Angriffselements 14 in dieser Richtung erstreckt, um zu verhindern, dass Material der Übertragungsmaske in diese Bereiche gelangt, was eine spätere Entformung erschweren könnte.

Die Teilabbildungen c) und d) von Figur 8, die Ausschnittvergrößerungen von dem Angriffselement 14 und dem Vorsprung 42 jeweils in einer Draufsicht und einer Seitenansicht zeigen, illustrieren eine weitere vorteilhafte Ausgestaltung der Hilfsstruktur 18. Verdeckte Elemente sind dabei gestrichelt dargestellt.

Einige Angriffselemente 14 weisen abstehende Häkchen 14h (Hooks) zur Befestigung von Drahtbögen, Gummibändern und Ähnlichem auf. Die Gefahr, dass solche Häkchen beim Abnehmen der Übertragungsmaske von dem Echtmodell bzw. von den Zähnen des Patienten an dem Echtmodell bzw. in der Übertragungsmaske hängen bleiben, ist mit der konventionellen Technik recht hoch.

Durch Vorsehen einer Hilfsstruktur 18, wie sie in Figur 8 illustriert ist, kann dies auf einfache Weise verhindert werden. Hierzu wird ein Vorsprung 42 vorgesehen, der eine in Entformungsrichtung (nach oben) offene Ausnehmung 42o aufweist, die so angeordnet ist, dass dann, wenn das Angriffselement 14 in der Soll-Position in der Haltevorrichtung des Echtmodells 10 gehalten wird, das Häkchen 14h in der Ausnehmung 42o aufgenommen ist. Das Spiel zwischen der Ausnehmung 42o und dem Häkchen 14h ist dabei so bemessen, dass einerseits beim Erstellen der Übertragungsmaske kein Material von dieser in den Zwischenraum eindringt und andererseits beim Abnehmen der Übertragungsmaske mit dem darin gehaltenen Angriffselement 14 von dem Echtmodell 10 das Häkchen 14h ohne großen Kraftaufwand aus der Ausnehmung 42o herausgenommen werden kann.

Das vorstehend beschriebene und anhand der Ausführungsbeispiele illustrierte erfindungsgemäße Verfahren ermöglicht eine erhebliche Arbeitserleichterung, da eine aufwändige manuelle Nachbearbeitung des Echtmodells bzw. der davon abgeformten Übertragungsmaske deutlich reduziert werden kann.

## Patentansprüche

1. Verfahren zur Herstellung eines dreidimensionalen Echtmodells (10) der Ist-Stellung von wenigstens zwei Zähnen (12) eines Patienten, wobei das Echtmodell (10) weiter wenigstens eine Haltevorrichtung umfasst, die mit einem zugehörigen Zahn (12) aus den wenigstens zwei Zähnen (12) in dem Echtmodell (10) verbunden und dazu ausgebildet ist, ein separat von dem Echtmodell (10) ausgebildetes Angriffselement (14) formschlüssig in einer Soll-Position an dem zugehörigen Zahn (12) in dem Echtmodell (10) zu halten, wobei von dem Echtmodell (10) eine Übertragungsmaske abformbar ist, die zur Befestigung des Angriffselements (14) an dem zugehörigen Zahn des Patienten verwendbar ist, das Verfahren umfassend die Schritte:
A) Erstellen eines dreidimensionalen digitalen Modells (10') für die wenigstens zwei Zähne (12) und die Haltevorrichtung und
B) Erstellen des dreidimensionalen Echtmodells (10) auf Basis des dreidimensionalen digitalen Modells (10'), vorzugsweise vermittels einem Rapid-Prototyping Verfahren,
**dadurch gekennzeichnet, dass** der Schritt A) einen Schritt a1) umfasst, bei dem wenigstens eine Hilfsstruktur (18) an dem digitalen Modell (10') vorgesehen wird, die dazu ausgebildet ist, eine Nachbearbeitung des Echtmodells (10) oder/und der davon abzuformenden Übertragungsmaske zu erleichtern.

2. Verfahren nach Anspruch 1,
**dadurch gekennzeichnet, dass** die Hilfsstruktur (18) als Bearbeitungsmarkierung (24, 28) oder Entformungserleichterung (20, 38, 40, 42) ausgebildet ist.

3. Verfahren nach Anspruch 1 oder 2,
**dadurch gekennzeichnet, dass** der Schritt a1) umfasst, eine in der Ist-Stellung von Zähnen und ggf. Zahnfleisch des Patienten vorliegende Vertiefung (16) wenigstens teilweise aufzufüllen, so dass insbesondere unter sich gehende Stellen (21, 22) ausgeblockt werden.

4. Verfahren nach einem der vorhergehenden Ansprüche, **dadurch gekennzeichnet, dass** der Schritt a1) umfasst, an dem digitalen Modell (10') einen Vorsprung (42) unterhalb der Soll-Position für das Angriffselement (14) vorzusehen.

5. Verfahren nach einem der vorhergehenden Ansprüche, **dadurch gekennzeichnet, dass** der Schritt a1) umfasst, an dem digitalen Modell (10') auf Höhe des Zahnfleischs wenigstens eine Vertiefung (24) oder einen Vorsprung (28) als Bearbeitungsmarkierung vorzusehen.

6. Verfahren nach einem der vorhergehenden Ansprüche, **dadurch gekennzeichnet, dass** der Schritt a1) umfasst, an dem digitalen Modell (10') auf Höhe des Zahnfleischs wenigstens eine auf einer im Wesentlichen konstanten Höhe verlaufende oder umlaufende Struktur in Form einer Vertiefung (24) oder eines Vorsprungs (28) oder in Form einer Reihe von Vertiefungen (24) oder/und Vorsprüngen (28) vorzusehen.

7. Verfahren nach einem der vorhergehenden Ansprüche, **dadurch gekennzeichnet, dass** der Schritt a1) umfasst, an dem digitalen Modell (10') Begrenzungswände (30) vorzusehen, die einen wenigstens nach oben offenen Hohlraum definieren, in welchem die Zähne (12) und die wenigstens eine Haltevorrichtung vorgesehen sind.

8. Verfahren nach einem der vorhergehenden Ansprüche, **dadurch gekennzeichnet, dass** der Schritt a1) umfasst, wenigstens einen Vorsprung an dem digitalen Modell (10') vorzusehen, der als sich in Zahn-Höhenrichtung und im Wesentlichen senkrecht zu einer Zahn-Seitenfläche (12f) erstreckende Wand (38, 40) ausgebildet ist, wobei eine Dicke (d) der Wand (38, 40) parallel zur Zahn-Seitenfläche (12f) kleiner oder gleich 1 mm, und vorzugsweise größer oder gleich 0,1 mm ist.

9. Verfahren nach einem der vorhergehenden Ansprüche, **dadurch gekennzeichnet, dass** das digitale Modell (10') wenigstens vor und nach dem Schritt a1) auf einem Bildschirm angezeigt wird, bevorzugt auch während der Durchführung von Schritt a1).

10. Verfahren nach einem der vorhergehenden Ansprüche, **dadurch gekennzeichnet, dass** vor dem Schritt a1) das Angriffselement (14) an der Soll-Position in dem digitalen Modell (10') vorgesehen wird und nach dem Schritt a1) das Angriffselement von dem digitalen Modell (10') entfernt wird.

11. Verfahren zur Herstellung einer Hilfsvorrichtung für das Befestigen eines Angriffselements (14) an einem zugeordneten Zahn eines Patienten, umfassend die folgenden Schritte:
1) Herstellen eines dreidimensionalen Echtmodells (10) gemäß einem Verfahren nach einem der vorhergehenden Ansprüche,
2) Einsetzen des Angriffselements (14) in die Haltevorrichtung des Echtmodells (10),
3) Einbetten des in der Haltevorrichtung aufgenommenen Angriffselements (14) sowie einer Mehrzahl von charakteristischen Flächenabschnitten des Echtmodells (10) in die Übertragungsmaske auf Basis einer aushärtbaren Formmasse (31) oder wenigstens einer tiefziehbaren Folie,
4) Abnehmen der Übertragungsmaske einschließlich des darin gehaltenen Angriffselements (14) als die Hilfsvorrichtung von dem Echtmodell (10).

## Claims

1. A method for manufacturing a three-dimensional real model of the actual position of at least two teeth (12) of a patient, wherein the real model (10) further comprises at least one holding device which is connected to an associated tooth (12) of the at least two teeth (12) in the real model (10) and is configured to hold with positive fit an engagement element (14) configured separately from the real model (10) in a target position on the associated tooth (12) in the real model (10), wherein a transfer mask is moldable by the real model (10), wherein said transfer mask can be used for attaching the engagement element (14) to the associated tooth of the patient, the method comprising the steps of:
A) Creating a three-dimensional digital model (10') for the at least two teeth (12) and the holding device and
B) Creating the three-dimensional real model (10) based on the three-dimensional digital model (10'), preferably by means of a rapid prototyping method,
**characterized in that** the step A) comprises a step a1), in which at least one auxiliary structure (18) is provided on the digital model (10') which is configured to facilitate a post-processing of the real model (10) and/or of the transfer mask to be molded therefrom.

2. The method according to claim 1,
**characterized in that** the auxiliary structure (18) is configured as a machining marks (24, 28) or demolding relief (20, 38, 40, 42).

3. The method according to claim 1 or 2,
**characterized in that** the step a1) comprises at least partially filling a recess (16) present in the actual position of teeth and possibly gums of the patient, such that in particular undercuts (21, 22) are blocked out.

4. The method according to one of the preceding claims,
**characterized in that** the step a1) comprises providing a projection (42) below the target position for the engagement element (14) on the digital model (10').

5. The method according to one of the preceding claims,
**characterized in that** the step a1) comprises providing at least one recess (24) or a projection (28) as a machining mark on the digital model (10') at the level of the gum.

6. The method according to one of the preceding claims,
**characterized in that** the step a1) comprises providing, on the digital model (10') at the level of the gum, at least one structure extending or running at an essentially constant height in the form of a recess (24) or a projection (28) or in the form of a series of recesses (24) and/or projections (28).

7. The method according to one of the preceding claims, **characterized in that** the step a1) comprises providing on the digital model (10') boundary walls (30) which define an at least upwardly open cavity in which the teeth (12) and the at least one holding device are provided.

8. The method according to one of the preceding claims,
**characterized in that** the step a1) comprises providing at least one projection on the digital model (10'), which is configured as a wall (38, 40) extending in the tooth-height direction and essentially perpendicular to a tooth-side face (12f), wherein a thickness (d) of the wall (38, 40) parallel to the tooth-side face (12f) is less than or equal to 1 mm, and preferably greater than or equal to 0.1 mm.

9. The method according to one of the preceding claims,
**characterized in that** the digital model (10') is displayed on a screen at least before and after the step a1), preferably also during the execution of step a1).

10. The method according to one of the preceding claims,
**characterized in that** the engagement element (14) is provided at the target position in the digital model (10') before the step a1), and after the step a1) the engagement element is removed from the digital model (10').

11. The method for manufacturing an auxiliary device for fastening an engagement element (14) to an associated tooth of a patient comprising the following steps:
1) Manufacturing a three-dimensional real model (10) according to a method according to one of the preceding claims,
2) Inserting the engagement element (14) into the holding device of the real model (10),
3) Embedding the engagement element (14) accommodated in the holding device and a plurality of characteristic surface sections of the real model (10) into the transfer mask on the basis of a curable molding material (31) or at least one deep drawable film,
4) Removing the transfer mask including the engagement element (14) held therein as the auxiliary device from the real model (10).

## Revendications

1. Procédé de fabrication d'un modèle véritable tridimensionnel (10) de la position réelle d'au moins deux dents (12) d'un patient, le modèle véritable (10) comprenant en plus au moins un dispositif de fixation qui est relié avec une dent correspondante (12) au moins des deux dents (12) dans le modèle véritable (10) et étant constitué à cet effet, pour fixer par conformité de forme un élément d'application (14) constitué séparément du modèle véritable (10) dans une position théorique sur la dent correspondante (12) dans le modèle véritable (10), un masque de transfert pouvant être modelé à partir du modèle véritable (10), qui peut être utilisé pour fixer l'élément d'application (14) sur la dent correspondante du patient, le procédé comprenant les étapes :
A) élaboration d'un modèle numérique tridimensionnel (10') pour au moins les deux dents (12) et le dispositif de fixation et
B) élaboration du modèle véritable tridimensionnel (10) sur la base du modèle numérique tridimensionnel (10') de préférence au moyen d'un procédé de prototypage rapide,
**caractérisé en ce que** l'étape A) comprend une étape a1) pour laquelle au moins une structure auxiliaire (18) est prévue sur le modèle numérique (10'), qui est constituée à cet effet pour faciliter une reprise ultérieure du modèle véritable (10) ou/et du masque de transfert à modeler depuis celui-ci.

2. Procédé selon la revendication 1,
**caractérisé en ce que** la structure auxiliaire (18) est constituée en tant que repère de travail (24, 28) ou facilitation de déformation (20, 38, 40, 42).

3. Procédé selon la revendication 1 ou 2,
**caractérisé en ce que** l'étape a1) consiste à remplir au moins en partie une cavité (16) existante dans la position réelle des dents et le cas échéant la gencive du patient de telle manière notamment que des emplacements (21, 22) se développant entre elles soient comblés.

4. Procédé selon l'une quelconque des revendications précédentes,
**caractérisé en ce que** l'étape a1) consiste à prévoir sur le modèle numérique (10') une partie en saillie (42) en dessous de la position théorique pour l'élément d'application (14).

5. Procédé selon l'une quelconque des revendications précédentes,
**caractérisé en ce que** l'étape a1) consiste à prévoir sur le modèle numérique (10') à la hauteur de la gencive au moins une cavité (24) ou une partie en saillie (28) en tant que repère de travail.

6. Procédé selon l'une quelconque des revendications précédentes,
**caractérisé en ce que** l'étape a1) consiste à prévoir sur le modèle numérique (10') à la hauteur de la gencive au moins une structure périphérique ou passant sur une hauteur pour l'essentiel constante sous la forme d'une cavité (24) ou d'une partie en saillie (28) ou sous la forme d'une série de cavités (24) ou/et de parties en saillie (28).

7. Procédé selon l'une quelconque des revendications précédentes,
**caractérisé en ce que** l'étape a1) consiste à prévoir sur le modèle numérique (10') des parois de délimitation (30) qui définissent au moins un espace creux ouvert vers le haut dans lequel sont prévues les dents (12) et au moins un dispositif de fixation.

8. Procédé selon l'une quelconque des revendications précédentes,
**caractérisé en ce que** l'étape a1) consiste à prévoir au moins une partie en saillie sur le modèle numérique (10') qui est constituée comme une paroi (38, 40) s'étendant dans le sens de la hauteur de la dent et pour l'essentiel perpendiculairement à une surface latérale de la dent (12f), une épaisseur (d) de la paroi (38, 40) étant parallèlement à la surface latérale de la dent (12f) plus petite ou égale à 1 mm et de préférence supérieure ou égale à 0,1 mm.

9. Procédé selon l'une quelconque des revendications précédentes,
**caractérisé en ce que** le modèle numérique (10') est affiché au moins avant et après l'étape a1) sur un écran, de préférence également pendant l'exécution de l'étape a1).

10. Procédé selon l'une quelconque des revendications précédentes,
**caractérisé en ce qu'**avant l'étape a1), l'élément d'application (14) est prévu à la position théorique dans le modèle numérique (10') et après l'étape a1) l'élément d'application est enlevé du modèle numérique (10').

11. Procédé pour la fabrication d'un dispositif auxiliaire pour la fixation d'un élément d'application (14) sur un dent attribuée d'un patient, comprenant les étapes suivantes :
1) réalisation d'un modèle véritable tridimensionnel (10) conformément à un procédé selon l'une quelconque des revendications précédentes,
2) insertion de l'élément d'application (14) dans le dispositif de fixation du modèle véritable (10),
3) incorporation de l'élément d'application (14) logé dans le dispositif de fixation ainsi que d'une pluralité de sections de surface caractéristiques du modèle véritable (10) dans le masque de transfert sur la base d'une matière moulable thermodurcissable (31) ou au moins d'une feuille emboutissable,
4) enlèvement du masque de transfert y compris de l'élément d'application (14) fixé dedans en tant que dispositif auxiliaire du modèle véritable (10).
